# EUROPEAN PATENT SPECIFICATION

(11) **EP 4 528 524 B1**
(45) Date of publication and mention of the grant of the patent: **30.09.2026**
(21) Application number: 23889833.2
(22) Date of filing: 08.08.2023
(51) Int. Cl.: G06N 3/0464, G06N 3/063, G06F 17/16

(54) **AI CHIP, ELECTRONIC DEVICE, AND CONVOLUTION OPERATION METHOD**
AI-CHIP, ELEKTRONISCHE VORRICHTUNG UND FALTUNGSBETRIEBSVERFAHREN
PUCE D'IA, DISPOSITIF ÉLECTRONIQUE ET PROCÉDÉ D'OPÉRATION DE CONVOLUTION

(43) Date of publication of application: 26.03.2025
(73) Proprietor: VeriSilicon Microelectronics (Shanghai) Co., Ltd., Shanghai 201203 (CN); VeriSilicon Microelectronics (Chengdu) Co., Ltd., Chengdu, Sichuan 610041 (CN); VeriSilicon Microelectronics (Nanjing) Co., Ltd., Nanjing, Jiangsu 211500 (CN); VeriSilicon Technology (Shanghai) Co., Ltd., Shanghai 201306 (CN); Verisilicon Microelectronics (Hainan) Co., Ltd., Haikou, Hainan 570208 (CN); VeriSilicon Microelectronics (Beijing) Co., Ltd., Beijing 100193 (CN)
(72) Inventor: XU, Sen, Shanghai 201203 (CN); LO, Mankit, Shanghai 201203 (CN); DENG, Minyu, Chengdu, Sichuan 610041 (CN); LI, Junshen, Chengdu, Sichuan 610041 (CN); JIN, Yunyi, Chengdu, Sichuan 610041 (CN); WU, Xuesong, Chengdu, Sichuan 610041 (CN); FAN, Peng, Chengdu, Sichuan 610041 (CN); ZHANG, Weiming, Chengdu, Sichuan 610041 (CN); YOU, Qingyan, Chengdu, Sichuan 610041 (CN); ZHU, Jiayi, Shanghai 201203 (CN)
(74) Representative: Locas, Davide
(86) International application number: PCT/CN2023/111828
(87) International publication number: WO 2025/030390

(56) References cited:
- WO-A1-2022/007266
- WO-A1-2023/071658
- CN-A- 112 215 745
- CN-A- 113 807 509
- CN-A- 113 919 477
- CN-A- 114 175 056
- CN-A- 115 758 054
- US-A1- 2020 184 002
- US-A1- 2023 289 230
- WANG QINGLIN ET AL: "Parallel convolution algorithm using implicit matrix multiplication on multi-core CPUs", 2019 INTERNATIONAL JOINT CONFERENCE ON NEURAL NETWORKS (IJCNN), IEEE, 14 July 2019 (2019-07-14), pages 1 - 7, XP033621848, DOI: 10.1109/IJCNN.2019.8852012
- VASUDEVAN ARAVIND ET AL: "Parallel Multi Channel convolution using General Matrix Multiplication", 2017 IEEE 28TH INTERNATIONAL CONFERENCE ON APPLICATION-SPECIFIC SYSTEMS, ARCHITECTURES AND PROCESSORS (ASAP), IEEE, 10 July 2017 (2017-07-10), pages 19 - 24, XP033134440, DOI: 10.1109/ASAP.2017.7995254
- SOLTANIYEH MOHAMMADREZA M SOLTANIYEH@CS RUTGERS EDU ET AL: "An Accelerator for Sparse Convolutional Neural Networks Leveraging Systolic General Matrix-matrix Multiplication", ACM TRANSACTIONS ON ARCHITECTURE AND CODE OPTIMIZATION, ASSOCIATION FOR COMPUTING MACHINERY, US, vol. 19, no. 3, 25 May 2022 (2022-05-25), pages 1 - 26, XP058786985, ISSN: 1544-3566, DOI: 10.1145/3532863
- ADIONO TRIO ET AL: "Low Latency YOLOv3-Tiny Accelerator for Low-Cost FPGA Using General Matrix Multiplication Principle", IEEE ACCESS, IEEE, USA, vol. 9, 15 October 2021 (2021-10-15), pages 141890 - 141913, XP011885429, DOI: 10.1109/ACCESS.2021.3120629

## Description

### Technical Field

The present disclosure belongs to the field of artificial intelligence, and specifically relates to an AI chip, an electronic device, and a convolution operation method.

### Background

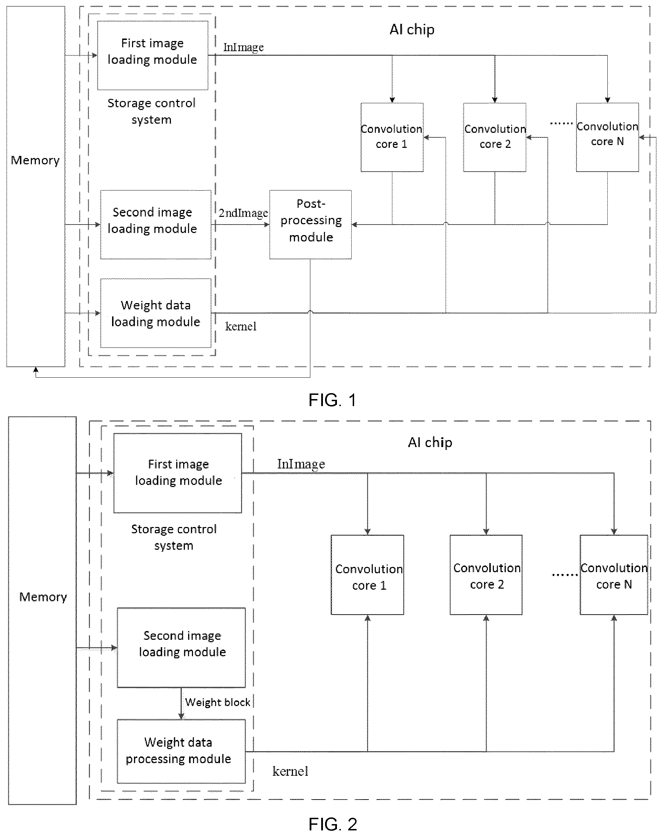

In related technologies, GEneral Matrix Multiplication (GEMM) is usually implemented by Artificial Intelligence (AI) chips, such as Neural-network Processing Units (NPUs). A structure of the NPU chip is shown in FIG. 1, in which a Memory Sub System (MSS) reads input image data (represented, for example, by InImage for convolution operation with weight data), weight data (represented, for example, by kernel for convolution operation with the input image data), and 2ndImage data (for addition (tensor_add) or multiplication (tensor_mult) with image data output by convolution operation) from a memory (such as Double Data Rate (DDR) or Static Random Access Memory (SRAM)). The InImage data and the kernel data are convolved in a convolution core, the convolved data is inputted in a post-processing module (postprocess) for post-processing (including activation, pooling, tensor_add/tensor_mult with 2ndImage data, or the like), and the post-processed data are stored in a memory as finally output image data (represented, for example, by OutImage).

To limit a hardware area and improve the processing efficiency, the InImage data, the 2ndImage data, and the Outlmage data are processed in a form of 3DTile slicing. However, there is no concept of 3DTile for reading the weight data (kernel) in the hardware. To perform correct GEMM operation with InImage Tile, the kernel data needs to be stored in the memory after adjusting the arrangement order offline. In practical applications, the weight matrix P may come from output data of a certain layer in the neural network, and needs to be rearranged into a correct GEMM multiplication-addition order in an external module before being convolved with the InImage data. The time consumption is long when the weight matrix P is transmitted to an external module for matrix data rearrangement, and especially when a large matrix is processed, and consequently, the efficiency is very low.

WO2022/007266A1 and US2023289230A1 disclose a method and apparatus for accelerating a convolutional neural network. The method comprises: splitting, according to rows, a weight matrix of a convolutional layer into a plurality of weight segments, and respectively caching the plurality of weight segments to a plurality of calculation units in a calculation unit array (step 301); reading a plurality of input data streams respectively corresponding to the plurality of weight segments, and inputting the plurality of input data streams in parallel into the plurality of calculation units (step 302), wherein the input data streams are formed by means of splicing a plurality of rows of data in an input feature map of the convolutional layer; and within each calculation unit, performing a sliding window operation and a multiply-accumulate computation on the input data streams on the basis of the cached weight segments, so as to obtain an output feature map of the convolutional layer (step 303). By means of the method, data that enters each row of calculation units is continuously read according to the whole row of data, and does not need to be read in a cross-row or cross-column manner, such that a special design is not needed for the arrangement of a memory, convolutions of different sizes are supported, and the function of Im2col does not need to be realized, thereby reducing the complexity.

### Summary

In view of this, an objective of the present disclosure is to provide an AI chip, an electronic device, and a convolution operation method, so as to solve the problem that when a current AI chip performs a general matrix multiplication, it is necessary to transmit a weight matrix P to an external module for matrix data rearrangement, which consumes a long time, and especially when a large matrix is processed, and consequently, the efficiency is very low.

Embodiments of the present disclosure are implemented as follows.

According to a first aspect, an embodiment of the present disclosure provides an AI chip, including: N convolution cores and a storage control system, where N is an integer greater than or equal to 2, the storage control system is electrically connected to the N convolution cores, and the storage control system is configured to read input image data from a memory, distribute the input image data to each convolution core, read each weight block from the memory, split each weight block into N pieces of weight data, and distribute the N pieces of weight data to the N convolution cores, where each convolution core corresponds to a piece of weight data, and each weight block is a part of complete weight; each convolution core is configured to perform convolution operation on the received weight data and the input image data, where the convolution operation results of each convolution core for the same weight block are added to obtain a convolution operation result of each weight block, and the convolution operation results of each weight block are added to obtain a final convolution operation result.

The concept of Tile is introduced into the weight data, the complete weight block is divided into a plurality of weight blocks, each weight block is read, and each weight block is divided into N pieces of weight data to be distributed to N convolution cores, so that inefficient data rearrangement of the weight data by an external module is not needed, a number of cycles of GEMM operations is reduced, and the convolution operation efficiency is improved.

The storage control system is configured to: split each weight block with a size of A*B into N pieces of weight data with a size of A*Kpc, or split each weight block with a size of B*A into N pieces of weight data with a size of Kpc*A, where A, B, and Kpc are positive integers, B is a maximum number of weight element groups processed by each convolution pass for all convolution cores, A is a maximum height of all convolution cores in a first direction, and Kpc is a maximum number of weight element groups processed by each convolution pass for each convolution core in a second direction.

The processing efficiency is improved to a maximum extent by splitting each weight block with a size of A*B into N pieces of weight data with a size of A*Kpc, or splitting each weight block with a size of B*A into N pieces of weight data with a size of Kpc*A, regardless of whether it is a general matrix P*matrix Q or a matrix PT*matrix Q, where the matrix PT is a transpose matrix of the matrix P.

The storage control system includes: a first image data loading module, a second image data loading module, and a weight data processing module; where the first image data loading module is configured to read the input image data from a memory and distribute the input image data to each convolution core; the second image data loading module is configured to read each weight block from the memory; and the weight data processing module is separately electrically connected to the second image data loading module and the N convolution cores, and the weight data processing module is configured to split each weight block with a size of A*B into N pieces of weight data with a size of A*Kpc and distribute the weight data to the N convolution cores, or split each weight block with a size of B*A into N pieces of weight data with a size of Kpc*A and distribute the weight data to the N convolution cores.

In the embodiment of the present disclosure, when the GEMM operation is performed, an original weight data request channel is not used to request kernel data, but the second image data loading module is used to request the weight matrix P, and the second image data loading module reads data in a form of 3DTile, so that only a part of the complete weight, namely one weight block, is read when the weight data is read every time, and an external module is not required for performing inefficient data rearrangement on the weight data, thereby reducing a number of cycles of GEMM operations.

With reference to a possible implementation of the embodiment of the first aspect, if the weight data processing module is configured to split each weight block with a size of A*B into N pieces of weight data with a size of A*Kpc, the weight data processing module includes N registers that are in one-to-one correspondence with the N convolution cores, where the N registers are electrically connected to the second image data loading module, and each register is configured to store a piece of weight data with a size of A*Kpc.

In the embodiment of the present disclosure, N registers are used to split each weight block with a size of A*B into N pieces of weight data with a size of A*Kpc, so that the objective of the present disclosure is achieved, and meanwhile, the cost can be saved and the complexity of the AI chip can be reduced.

With reference to a possible implementation of the embodiment of the first aspect, the weight data processing module includes: N extractors electrically connected to the second image data loading module, where each of the extractors is configured to extract a piece of weight data with a size of Kpc*A from a weight block in a clock cycle when the weight block has a size of B*A and Kpc=1.

With reference to a possible implementation of the embodiment of the first aspect, the weight data processing module includes: N logic shifters electrically connected to the second image data loading module, where each of the shifters is configured to extract a piece of weight data with a size of Kpc*A from a weight block in A clock cycles when the weight block has a size of B*A and Kpc>1.

With reference to a possible implementation of the embodiment of the first aspect, if the weight data processing module is configured to split each weight block with a size of B*A into N pieces of weight data with a size of Kpc*A, the weight data processing module includes: N extractors, N logic shifters, and N selectors; the N extractors are electrically connected to the second image data loading module, and each of the extractors is configured to extract a piece of weight data with a size of Kpc*A from a weight block in a clock cycle; the N logic shifters are electrically connected to the second image data loading module, and each of the shifters is configured to extract a piece of weight data with a size of Kpc*A from a weight block in A clock cycles; the N selectors are in one-to-one correspondence with the N convolution cores, each of the selectors is electrically connected to an extractor, a logic shifter and a convolution core, and each of the selectors is configured to send the output of the extractor to a corresponding convolution core when Kpc=1 and send the output of the logic shifter to a corresponding convolution core when Kpc>1.

In the embodiment of the present disclosure, when Kpc=1, N extractors are used to split each weight block with a size of B*A into N pieces of weight data with a size of Kpc*A, when Kpc>1, N logic shifters are used to split each weight block with a size of B*A into N pieces of weight data with a size of Kpc*A. Meanwhile, N selectors are used to select and output the correct data to a corresponding convolution core, so that the objective of the present disclosure is achieved, the cost can be saved, the complexity of the AI chip can be reduced, and the AI chip is compatible with multiple Kpc division methods.

With reference to a possible implementation of the embodiment of the first aspect, the weight data processing module includes: N registers, N extractors, N logic shifters, N first selectors, and N second selectors; the N registers are in one-to-one correspondence with the N convolution cores, the N registers are electrically connected to the second image data loading module, and each of the registers is configured to store a piece of weight data with a size of A*Kpc; the N extractors are electrically connected to the second image data loading module, and each of the extractors is configured to extract a piece of weight data with a size of Kpc*A from a weight block in a clock cycle; N logic shifters are electrically connected to the second image data loading module, and each of the shifters is configured to extract a piece of weight data with a size of Kpc*A from a weight block in A clock cycles; each of the first selectors is electrically connected to an extractor and a logic shifter, and each of the first selectors is configured to select and output the output data of a corresponding extractor when Kpc=1 and select and output the output data of a corresponding logic shifter when Kpc>1; and each of the second selectors is electrically connected to a first selector, a register and a convolution core, and each of the second selectors is configured to select and output the output data of a corresponding register when the weight block has a size of A*B and select and output the output data of a corresponding first selector when the weight block has a size of B*A.

In the embodiment of the present disclosure, the weight data processing module with the foregoing structure can be compatible with a plurality of scenarios. For example, when the weight block has a size of A*B, the second image data loading module sends the weight block to N registers through a path0; when the weight block has a size of B*A and Kpc=1, the second image data loading module sends the weight block to N extractors; when the weight block has a size of B*A and Kpc>1, the second image data loading module sends the weight block to N logic shifters, then N first selectors are used to select and output the correct data to a corresponding second selector, and then the second selector selects and output the correct data to a corresponding convolution core, so that the objective of the present disclosure is achieved, the cost can be saved, the complexity of the AI chip can be reduced, and the AI chip is compatible with a plurality of scenarios, thus improving the applicability of the solution.

With reference to a possible implementation of the embodiment of the first aspect, each convolution core is further configured to, when receiving the weight data with a size of Kpc*A, convert the weight data with a size of Kpc*A into the weight data with a size of A*Kpc, and perform convolution operation on the weight data and the input image data.

In the embodiment of the present disclosure, when the weight data with a size of Kpc*A is received, the weight data with a size of Kpc*A is converted into the weight data with a size of A*Kpc, and is then convolved with the input image data, so that the operation of the matrix PT*matrix Q can be achieved, and the AI chip can be applied to not only the matrix P*matrix Q but also the matrix PT*matrix Q. According to a second aspect, an embodiment of the present disclosure further provides an electronic device, including: a memory and the AI chip provided by the embodiment of the first aspect and/or in connection with any possible implementation of the embodiment of the first aspect, where the AI chip is electrically connected to the memory.

According to a third aspect, an embodiment of the present disclosure further provides a computer-implemented convolution operation method, implemented by means of an AI chip according to the first aspect, including: reading input image data, reading each weight block, and splitting each weight block into N pieces of weight data, where each weight block is a part of complete weight block; performing convolution operation on each piece of weight data and the input image data; adding convolution operation results of each piece of weight data belonging to the same weight block to obtain a convolution operation result of each weight block; and adding the convolution operation results of each weight block to obtain a final convolution operation result.

Other features and advantages of the present disclosure will be set forth in the specification below. The objectives and other advantages of the present disclosure will be implemented and attained by the structure particularly pointed out in the specification and drawings.

### Brief Description of Drawings

To describe the technical solutions in embodiments of the present disclosure or in the conventional technology more clearly, the following briefly describes the drawings for describing embodiments. It is clear that the drawings in the following descriptions show merely some embodiments of the present disclosure, and those of ordinary skill in the art may still derive other drawings from these drawings without creative efforts. The foregoing and other objects, features and advantages of the present disclosure will become more apparent from the drawings.
FIG. 1 is a schematic diagram of a structure of a connection between an AI chip and a memory in a related technology.
FIG. 2 is a schematic diagram of a structure of a connection between an AI chip and a memory according to an embodiment of the present disclosure.
FIG. 3 is a schematic diagram of a principle of a convolution operation according to an embodiment of the present disclosure.
FIG. 4 is a schematic diagram of a principle that GEMM operation is equivalent to the convolution operation shown in FIG. 3 according to an embodiment of the present disclosure.
FIG. 5 is a schematic diagram illustrating a flow of data of a matrix P from a DDR memory to an SRAM and then to a convolution core according to an embodiment of the present disclosure.
FIG. 6a is another schematic diagram illustrating a flow of 2D data of a matrix P from a DDR memory to an SRAM and then to a convolution core according to an embodiment of the present disclosure.
FIG. 6b is another schematic diagram illustrating a flow of 3D data of a matrix P from a DDR memory to an SRAM and then to a convolution core according to an embodiment of the present disclosure.
FIG. 7 is a schematic diagram of a structure of a weight data processing module according to an embodiment of the present disclosure.
FIG. 8 is a schematic diagram of a structure of another weight data processing module according to an embodiment of the present disclosure.
FIG. 9 is a schematic flowchart of a convolution operation method according to an embodiment of the present disclosure.

### Detailed Description of Embodiments

The technical solutions in embodiments of the present disclosure will be described below with reference to the drawings in the embodiments of the present disclosure. It is clear that the described embodiments are merely some but not all of embodiments of the present disclosure. The following embodiments may be used as examples to more clearly illustrate the technical solutions of the present disclosure, but cannot be used to limit the protection scope of the present disclosure. Those skilled in the art may understand that the following embodiments and features in the embodiments can be combined with each other without conflict.

It should be noted that similar reference numerals and letters indicate similar items in the following drawings, and therefore, once an item is defined in one of the drawings, no further definition or explanation is required in the following drawings. Meanwhile, in the description of the present disclosure, the relational terms such as "first" and "second" used herein are merely used to distinguish one entity or operation from another entity or operation without necessarily requiring or implying any actual relationship or order between such entities or operations. Moreover, terms "include", "comprise", or any other variants thereof are intended to cover a non-exclusive inclusion, so that a process, a method, an article, or a device that includes a list of elements includes those elements, and also includes other elements which are not expressly listed, or further includes elements inherent to this process, method, article, or device. An element preceded by "includes a ..." does not, without more constraints, preclude the existence of additional identical elements in the process, method, article, or device that includes the element.

In addition, the term "and/or" in the present disclosure describes only an association relationship between associated objects, and indicates that three relationships may exist. For example, A and/or B may indicate three cases: A exists, both A and B exist, and B exists.

In the description of the embodiments of the present disclosure, unless otherwise explicitly specified or limited, the technical term "electrically connected" may be either directly electrically connected or indirectly electrically connected through an intermediate medium.

In view of the problem that when a current AI chip performs a general matrix multiplication, it is necessary to transmit a weight matrix P to an external module for matrix data rearrangement, which consumes a long time, and especially when a large matrix is processed, and consequently, the efficiency is very low. Embodiments of the present disclosure provide an AI chip, an electronic device, and a convolution operation method, so that a weight matrix P does not need to be transmitted to an external module for matrix data rearrangement, and the convolution operation efficiency is improved. An AI chip provided by an embodiment of the present disclosure will be described below with reference to FIG. 2. The AI chip includes: N convolution cores and a storage control system, where the storage control system is connected to N convolution cores, and N is an integer greater than or equal to 2. It may be understood that the AI chip is further electrically connected to a memory. The memory and the storage control system are different devices, both of which function and use differently. The memory is used as a storage device and is specially used to store data; and the storage control system is used as a read-write control system of the memory and is used to control the reading and writing of data.

The storage control system is configured to read input image data from a memory (may be an SRAM memory and/or a DDR memory), distribute the input image data to each convolution core, read each weight block (weight Tile) from the memory, split each weight block into N pieces of weight data, and distribute the N pieces of weight data to the N convolution cores, where each convolution core corresponds to a piece of weight data, and each weight block is a part of complete weight. In the embodiment of the present disclosure, the concept of Tile is introduced into the weight data, the complete weight block is divided into a plurality of weight blocks, each weight block is read, and each weight block is divided into N pieces of weight data to be distributed to N convolution cores, so that inefficient data rearrangement of the weight data by an external module is not needed, and a number of cycles of GEMM operations is reduced.

It may be understood that the input image data read from the memory by the storage control system may also be a part of the complete input image data, and the data are split to accommodate various sizes of memory.

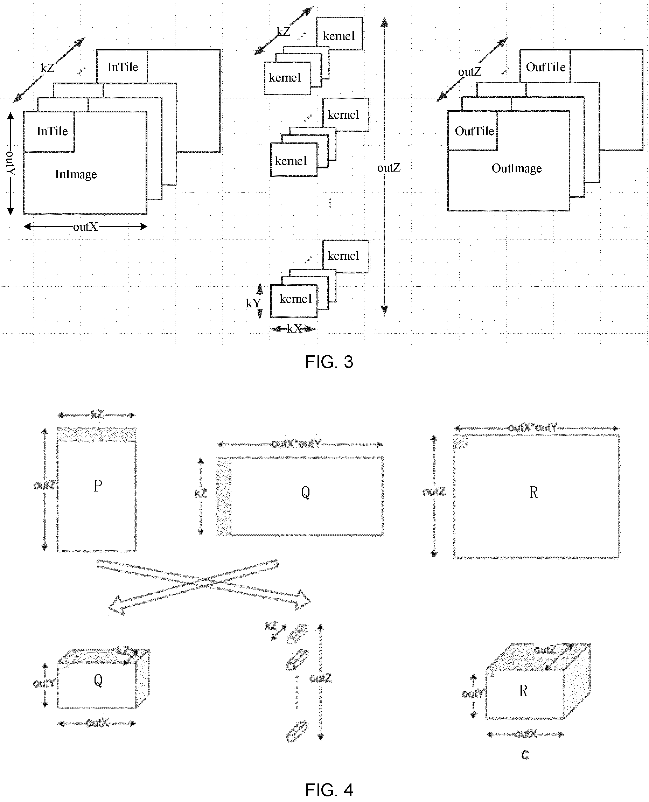

For a better understanding, the following description is made in conjunction with the convolution operation shown in FIG. 3. As shown in FIG. 3, the InImage has a dimension of outX*outY*kZ, and the kernel data has a dimension of kX*kY*kZ*outZ; where kZ represents a depth in a first direction, outZ represents a depth in a second direction, outX*outY represents a two-dimensional size of the input image data, outX represents a length of an image, outY represents a height of an image, kX*kY represents a size of a two-dimensional weight element group, kX represents a length of a two-dimensional weight element group, and kY represents a height of a two-dimensional weight element group.

The first three-dimensional (kX*kY*kZ) kernel array is correspondingly multiplied by each point in InImage with the same dimension to obtain kX*kY*kZ multiplication results, all the kX*kY*kZ multiplication results are added to obtain a first point of a first plane on OutImage, and the three-dimensional kernel array performs window sliding in InTile from left to right and then from top to bottom and performs the same multiplication and addition operation to obtain a first outTile of the first plane on OutImage. There are outZ three-dimensional kernel arrays in a fourth dimension, and the OutImage results of different planes in the outZ dimension can be obtained by separately performing the same operation on the kernel arrays.

The GEMM operation of the matrix P*matrix Q=matrix R may be equivalent to the convolution shown in FIG. 3, the equivalent schematic diagram of which is shown in FIG. 4. One matrix P of kZ*outZ (with a row of kZ, a column of outZ, and kX=kY=1) of the GEMM is taken as a kernel array, the other matrix Q of outX*outY*kZ (with a row of outX*outY, and a column of kZ) is taken as the InImage, and the GEMM can be regarded as the convolution of the InImage and the kernel array.

When weight data (kZ*outZ) are split, the data are split along kZ direction and then along outZ direction into a plurality of weight blocks with a size of A*B or B*A, where A and B are positive integers, A is a maximum height of all convolution cores in a first direction (such as the foregoing kZ direction), for example, the maximum value of A is 9, B is a maximum number of weight element groups processed by each convolution pass for all convolution cores, and the size of each weight element group is kX*kY*A, that is, a weight element group includes kX*kY*A weight elements, and when kX=kY=1, a weight element group includes A weight elements.

The storage control system is configured to: split each weight block with a size of A*B into N pieces of weight data with a size of A*Kpc, or split each weight block with a size of B*A into N pieces of weight data with a size of Kpc*A, where Kpc is a positive integer, and Kpc is a maximum number of weight element groups processed by each convolution pass for each convolution core in a second direction (such as the foregoing outZ direction).

When the GEMM is operated, for the matrix P, Tile data must be taken in the kZ direction and then in the outZ direction. According to the different data arrangement orders, the GEMM can be divided into two cases: a matrix P*matrix Q and a matrix PT*matrix Q, where the matrix PT is a transpose matrix of the matrix P. In a case of the matrix PT*matrix Q, the matrix P needs to be transposed to the matrix PT to be multiplied by the matrix Q, which can be made inside the convolution core. The two cases of the matrix P have a 2D form and a 3D form, respectively.

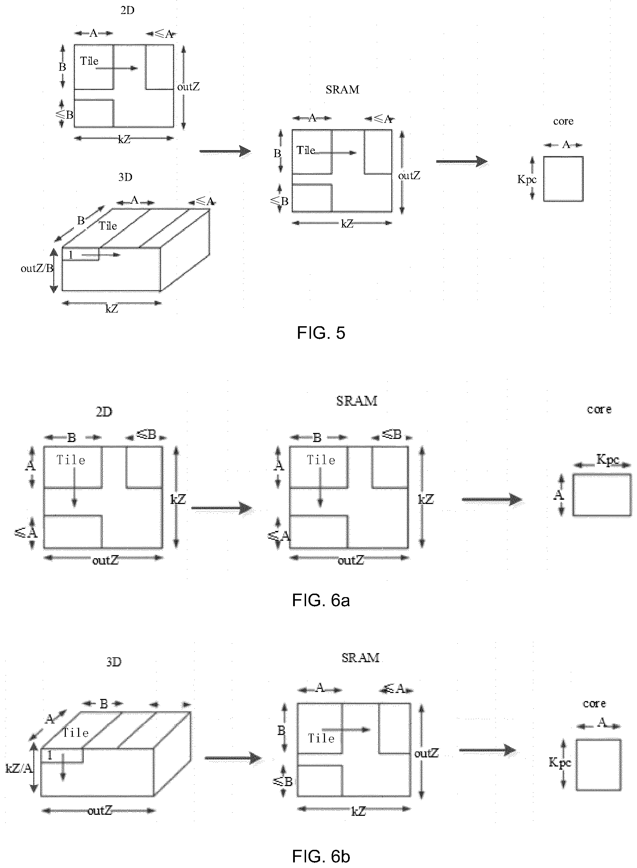

In a case of the matrix P*matrix Q, the kZ direction of matrix P is continuous in the memory. Two forms of the matrix P are shown in FIG. 5. FIG. 5 shows a flow of data from a DDR memory to SRAM (cache) and then to convolution core. The data can be stored in the DDR memory, then loaded to the SRAM, and then loaded to the convolution core. In this case, the memory in FIG. 2 may include both a DDR memory and an SRAM, and the DDR memory is connected to the storage control system through the SRAM.

An upper left side of FIG. 5 shows a 2D form of the matrix P stored in the DDR memory: in_x (a length of the matrix P in the x direction) = kZ; Tile_x (a length of Tile in the x direction) = A (Tile_x of the last Tile in the x direction may be less than Tile_x of other Tiles); in_y (a length of the matrix P in the y direction) = outZ; and Tile_y (a length of the Tile in the y direction) = B = Kpc*N (it may be understood that the Tile_y of the last Tile in the y direction may be less than the Tile_y of other Tiles), and the arrow represents a sliding direction of the Tile, namely, firstly from left to right, then from top to bottom, where only the sliding direction from left to right is shown in FIG. 5. A lower left side of FIG. 5 shows a 3D form of the matrix P stored in the DDR memory: in_x = kZ; Tile_x = A (Tile_x of the last Tile in the x direction is less than Tile_x of the other Tiles); in_y =outZ/B; Tile_y = 1; and in_z (a length of the matrix P in the z direction) = B (Tile_y of last Tile in the y direction may be less than Tile_y of other Tiles), and the arrow represents a sliding direction of Tile, namely, firstly from left to right and then from top to bottom. A middle part of FIG. 5 is a form of the matrix P cached in the SRAM memory during processing, which is the same as the 2D form in the DDR memory, and when the weight Tile is read, the read order is firstly from left to right and then from top to bottom. A right part of FIG. 5 is the weight data received for each convolution core, with the weight data having a size of A*Kpc.

In a case of the matrix PT*matrix Q, the outZ direction of matrix P is continuous in the memory. Two forms of matrix P are shown in FIGs. 6a and 6b. FIG. 6a shows a flow of 2D data from a DDR memory to SRAM and then to the convolution core, and FIG. 6b shows a flow of 3D data from a DDR memory to SRAM and then to the convolution core.

A left part of FIG. 6a is a 2D form of the matrix P stored in the DDR memory: in_x = outZ; Tile_x = B (Tile_x of the last Tile in the x direction may be less than Tile_x of other Tiles); in_y = kZ; and Tile_y = A (Tile_y of the last Tile in the y direction may not be less than Tile_y of the other Tiles), and the arrow represents a sliding direction of the Tiles, namely, firstly from top to bottom and then from left to right. A middle part of FIG. 6a is a form of the matrix P cached in SRAM, which is the same as the 2D form in the DDR memory, and the arrow represents a sliding direction of the Tiles, namely, firstly from top to bottom and then from left to right. A right part of FIG. 6a is the weight data received by each convolution core, the weight data has a size of Kpc*A, and needs to be transposed into A*Kpc when the convolution operation is performed.

A left part of FIG. 6b is a 3D form of the matrix P stored in the DDR memory: in_x = outZ; Tile_x = B (Tile_x of the last Tile in the x direction may be less than Tile_x of other Tiles); in_y = kZ/A; Tile_y = 1; and in_z = B. The arrow represents a sliding direction of the Tiles, namely, firstly from top to bottom and then from left to right. A middle part of FIG. 6b is a form of the matrix P cached in the SRAM during processing, which is the same as the 2D form of matrix P*matrix Q, and the arrow represents a sliding direction of Tile, namely, firstly from left to right and then from top to bottom; a right part of FIG. 6b is the weight data received for each convolution core, the weight data has a size of A*Kpc, and no additional transpose is needed when the convolution operation is performed.

When the storage control system reads the weight blocks, the weight blocks are sequentially read from the DDR memory or the SRAM memory based on the principle shown in FIGs. 5, 6a, and 6b. When reading the weight blocks, the storage control system preferentially reads from the SRAM, if the SRAM does not have the corresponding weight blocks, the storage control system reads from the DDR memory, and after being read from the DDR memory, the weight blocks need to be stored into the SRAM for caching. In an optional implementation, the SRAM memory may be a memory inside the AI chip, and the DDR memory is a memory outside the AI chip.

In an implementation, the storage control system includes: a first image data loading module, a second image data loading module, and a weight data processing module. The first image data loading module is separately electrically connected to a memory and N convolution cores, the second image data loading module separately is electrically connected to the memory and the weight data processing module, and the weight data processing module is separately electrically connected to N convolution cores.

The first image data loading module is configured to read the input image data from a memory and distribute the input image data to each convolution core. The second image data loading module is configured to read each weight block from the memory and send each read weight block to the weight data processing module. The weight data processing module is separately electrically connected to the second image data loading module and the N convolution cores, and is configured to split each weight block into N pieces of weight data and distribute the weight data to the N convolution cores.

In the embodiment of the present disclosure, when the GEMM operation is performed, an original weight data request channel is not used to request kernel data, but the second image data loading module is used to request the weight matrix P, and the second image data loading module reads data in a form of 3DTile, so that only a part of the complete weight, namely one weight block, is read when the weight data is read every time, and an external module is not required for performing inefficient data rearrangement on the weight data, thereby reducing a number of cycles of GEMM operations.

Specifically, the weight data processing module is configured to split each weight block with a size of A*B into N pieces of weight data with a size of A*Kpc and distribute the weight data to the N convolution cores, or split each weight block with a size of B*A into N pieces of weight data with a size of Kpc*A and distribute the weight data to the N convolution cores.

In an implementation, if the weight data processing module is configured to split each weight block with a size of A*B into N pieces of weight data with a size of A*Kpc, the weight data processing module includes N registers. The N registers are in one-to-one correspondence with the N convolution cores, the N registers are electrically connected to the second image data loading module, and each register is configured to store a piece of weight data with a size of A*Kpc. The register may be a Variable Length Writer (VLM) that receives variable length input and fixed length output, and may receive weight data with a variable effective length, and transmit the valid data to a corresponding convolution core after the valid data has a sufficient output width.

To ensure performance, the VLM has a maximum input width of min (sram_data_width A*max_kpc*bpp) and an output width of max_kpc*bpp. The parameter sram_data_width represents a width of the SRAM, and bpp represents a number of bytes per weight element. After being read from the DDR, the weight block needs to be stored into the SRAM for caching.

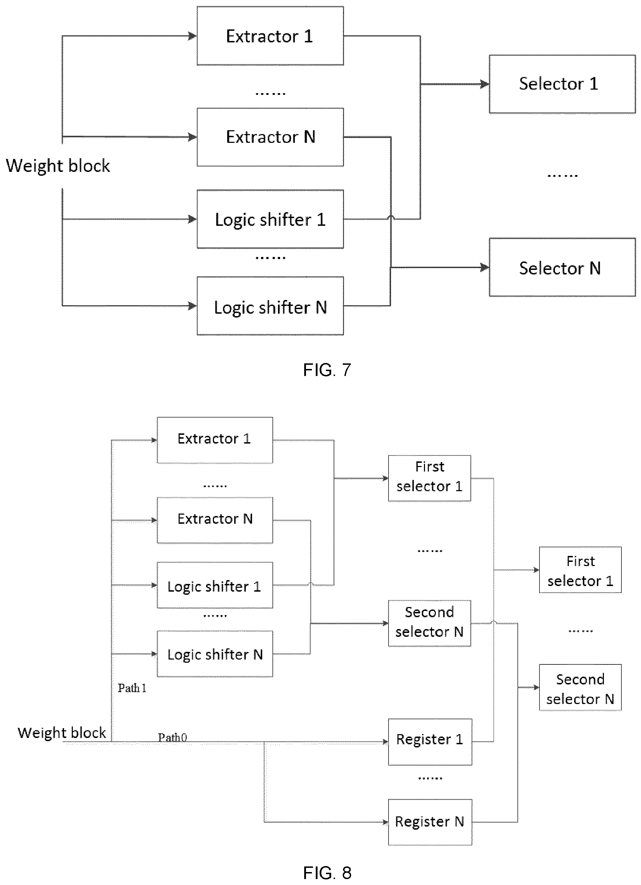

In another implementation, the weight data processing module is configured to split each weight block with a size of B*A into N pieces of weight data with a size of Kpc*A; and the weight data processing module includes: N extractors, N logic shifters, and N selectors as shown in FIG. 7. Each extractor and each logic shifter are connected to the second image data loading module, and a selector is connected to an extractor and a logic shifter. The N extractors are all electrically connected to the second image data loading module, and when Kpc=1, the second image data loading module sends the weight block data to the extractors. Each extractor is configured to extract a piece of weight data with a size of Kpc*A from a weight block in a clock cycle. In this implementation, the second image loading module may send A pieces of weight data of B to the extractor in a clock cycle.

When Kpc=1, adjacent weight elements belong to different convolution cores, and A B arrays (row arrays) (which means B arrays in a number of A) are included in valid data transmitted per cycle. Assuming that Kpc=1 and a number of convolution cores N=24, B=Kpc*N=1*24, assuming that A=9 and each weight element occupies a Byte, the width of data transmitted per cycle is 216 Bytes, and then Byte0, Byte24, Byte48, Byte72, Byte96, Byte120, Byte144, Byte168, and Byte196 belong to core1; and Byte1, Byte25, Byte49, Byte73, Byte97, Byte121, Byte145, Byte169, and Byte197 belong to core2, and so on. In this implementation, a clock cycle allows the transmission of A B arrays.

The N logic shifters are all electrically connected to the second image data loading module, and when Kpc>1, the second image data loading module sends the weight block data to the logic shifters. Each shifter is configured to extract a piece of weight data with a size of Kpc*A from a weight block in A clock cycles. In this implementation, the second image loading module only sends 1 piece of weight data of B to the logic shifter in a clock cycle, and a weight block with a size of B*A takes A clock cycles to be sent.

When Kpc>1, at most one B array is allowed to be transmitted per cycle. Assuming that Kpc=2 and a number of convolution cores N=24, and each weight element occupies a Byte, Kpc*N=2*24=48, then a width of data transmitted per cycle is 48 Bytes, and then Byte0 and Byte1 belong to core1; Byte2 and Byte3 belong to core2, and by analogy, Byte46 and Byte47 belong to core24. Then logic shifter 1 is responsible for outputting Byte0 and Byte1; the logic shifter 2 is responsible for outputting Byte2 and Byte3; by analogy, the logic shifter 24 is responsible for outputting Byte46 and Byte47.

The N selectors are in one-to-one correspondence with the N convolution cores, each selector is connected to an extractor, a logic shifter and a convolution core, and each selector is configured to send the output of the extractor to a corresponding convolution core when Kpc=1 and send the output of the logic shifter to a corresponding convolution core when Kpc> 1.

It may be understood that when the weight block has a size of B*A and Kpc=1, the weight data processing module may only include N extractors (not including N logic shifters and N selectors), and in this case, the N extractors are directly connected to the N convolution cores. Similarly, when the weight block has a size of B*A and Kpc>1, the weight data processing module may only include N logic shifters (not including N extractors and N selectors), and in this case, the N logic shifters are directly connected to the N convolution cores. The structure shown in FIG. 7 is a structure of a weight data processing module compatible with a plurality of Kpcs.

It may be understood that when the weight block has a size B*A and Kpc>1, the extractors are used to split each weight block with a size of B*A into N pieces of weight data with a size of Kpc*A. In this case, since Kpcs configured in different cases are different in size, and there may be a situation where Kpc of each convolution core is unevenly distributed at the edge Tile of the matrix P, and many variables are introduced into the design of splitting and recombining, to reduce the area overhead caused by these variables when Kpc>1, a logic shifter is used.

In another implementation, as shown in FIG. 8, the weight data processing module includes: N registers, N extractors, N logic shifters, N first selectors, and N second selectors. It may be understood that the second image data loading module does not simultaneously send the weight block to at least 2 of the extractors, the logic shifter, and the register when sending the weight block. When the weight block has a size of A*B, the second image data loading module sends the weight block to N registers through a path0; when the weight block has a size of B*A and Kpc=1, the second image data loading module sends the weight block to N extractors; and when the weight block has a size of B*A and Kpc>1, the second image data loading module sends the weight block to N logic shifters.

The N registers are in one-to-one correspondence with the N convolution cores, the N registers are electrically connected to the second image data loading module, and each register is configured to store a piece of weight data with a size of A*Kpc.

The N extractors are all electrically connected to the second image data loading module, and each extractor is configured to extract a piece of weight data with a size of Kpc*A from a weight block in a clock cycle.

The N logic shifters are all electrically connected to the second image data loading module, and each shifter is configured to extract a piece of weight data with a size of Kpc*A from a weight block in A clock cycles.

Each first selector is electrically connected to an extractor and a logic shifter, and each first selector is configured to select and output the output data of the corresponding extractor when Kpc=1 and select and output the output data of a corresponding logic shifter when Kpc>1.

Each second selector is connected to a first selector, a register, and a convolution core, and each second selector is configured to select and output the output data of a corresponding register when the weight block has a size of A*B (or the weight data have a size of A*Kpc) and select and output the output data of a corresponding first selector when the weight block has a size of B*A (or the weight data have a size of Kpc *A).

Each convolution core is configured to perform convolution operation on the received weight data and the input image data. Specifically, each convolution core is configured to, when receiving the weight data with a size of A*Kpc, convolve the received weight data and the input image data, and when receiving the weight data with a size of Kpc*A, convert the weight data with a size of Kpc*A into the weight data with a size of A*Kpc and perform convolution operation on the weight data and the input image data.

The convolution operation results of each convolution core for the same weight block are added based on a corresponding position to obtain a convolution operation result of each weight block, and the convolution operation results of each weight block are added based on a corresponding position to obtain a final convolution operation result.

In some possible implementations, the AI chip may further include a post-processing module, the post-processing module is connected to each convolution core and the memory, and the post-processing module is configured to add convolution operation results of each convolution core for the same weight block based on a corresponding position to obtain a convolution operation result of each weight block, and add convolution operation results of each weight block based on a corresponding position to obtain a final convolution operation result.

The AI chip may be an integrated circuit chip having signal processing capability. The AI chip may be a general-purpose processor, including a Central Processing Unit (CPU), a Network Processor (NP) and the like, or may further be a digital signal processor (DSP), an Application Specific Integrated Circuit (ASIC), a Field Programmable Gate Array (FPGA) or other programmable logic devices, discrete gates or transistor logic devices and discrete hardware components. The various methods, steps and logic block diagrams disclosed in embodiments of the present disclosure can be implemented or performed. The AI chip may also be any conventional processor or the like.

In addition, the AI chip may be a dedicated computation acceleration chip (or accelerator) designed to take a heavy computation task, such as a Graphics Processing Unit (GPU), a Tensor Processing Unit (TPU), a neural network processor, or the like, or may be another processor for an AI computation task.

An embodiment of the present disclosure further provides an electronic device, including: a memory and the AI chip, where the AI chip is electrically connected to the memory. The memory is used to store data required for performing a GEMM operation, such as inputting image data and weight data.

The electronic device includes but is not limited to a tablet, a notebook, a vehicle-mounted device, and a server.

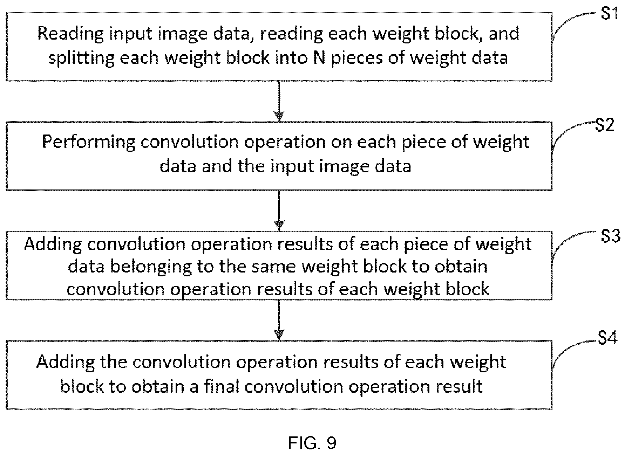

An embodiment of the present disclosure further provides a convolution operation method that can be applied to the AI chip. The convolution operation method provided by an embodiment of the present disclosure will be described below with reference to FIG. 9.

S1: reading input image data, reading each weight block, and splitting each weight block into N pieces of weight data.

The input image data may be read from the memory by the first image data loading module, each weight block may be read from the memory by the second image data loading module, and each weight block may be split into N pieces of weight data by the weight data processing module. For example, the second image data loading module sends each read weight block to the weight data processing module, and the weight data processing module splits each weight block into N pieces of weight data. Each weight block is a part of the complete weight.

When reading the input image data, the first image data loading module distributes the input image data to N convolution cores, where N is an integer greater than or equal to 2.

After splitting each weight block into N pieces of weight data, the weight data processing module distributes the N pieces of weight data to N convolution cores, and each convolution core corresponds to one piece of weight data.

When splitting each weight block into N pieces of weight data, the weight data processing module may split each weight block with a size of A*B into N pieces of weight data with a size of A*Kpc, or split each weight block with a size of B*A into N pieces of weight data with a size of Kpc*A, where A, B, and Kpc are positive integers, B is a maximum number of weight element groups processed by each convolution pass for all convolution cores, A is a maximum height of all convolution cores in a first direction, and Kpc is a maximum number of weight element groups processed by each convolution pass for each convolution core in a second direction.

S2: performing convolution operation on each piece of weight data and the input image data.

A convolution core in the AI chip can perform convolution operation on each piece of the received weight data and the input image data.

S3: adding convolution operation results of each piece of weight data belonging to the same weight block to obtain a convolution operation result of each weight block.

The convolution operation result of each weight block can be obtained by adding the convolution operation results of each weight data belonging to the same weight block by a post-processing module.

S4: adding the convolution operation results of each weight block to obtain a final convolution operation result.

The final convolution operation result can be obtained by adding the convolution operation results of each weight block by the post-processing module.

The convolution operation method provided by the embodiment of the present disclosure has the same implementation principle and technical effect as the foregoing AI chip embodiment, and for brief description, reference may be made to corresponding contents in the foregoing AI chip embodiment for the parts that are not mentioned in the method embodiment.

An embodiment of the present disclosure further provides a non-volatile computer-readable storage medium (hereinafter referred to as the storage medium), where a computer program is stored on the storage medium, and when the computer program is run by a computer such as the electronic device, the convolution operation method shown above is executed.

It should be noted that the embodiments in the specification are all described in a progressive manner, and each embodiment focuses on differences from other embodiments, and portions that are the same and similar between the embodiments may be referred to each other.

In the several embodiments provided in the present disclosure, it should be understood that the disclosed apparatus and method can also be implemented in other manners. The apparatus embodiments described above are merely illustrative. For example, flowcharts and block diagrams in the drawings show systematic architectures, functions, and operations of the apparatus, the method and the computer program product possibly implemented according to a plurality of embodiments of the present disclosure. In this regard, each block in the flowcharts or the block diagrams can represent a portion of a module, a program segment or codes, where the portion of the module, the program segment or the codes includes one or more executable instructions for implementing specified logical functions. It should also be noted that, in some alternative implementations, the functions shown in the blocks may occur in an order different from the order shown in the drawings. For example, two consecutive blocks may, in fact, be executed substantially in parallel, and the two blocks may sometimes be executed in a reverse order, depending upon the functions involved. It should also be noted that each block of the block diagrams and/or the flowcharts and a combination of the blocks in the block diagrams and/or the flowcharts can be implemented through a dedicated hardware-based system that executes a specified function or operation, or can be implemented through a combination of a dedicated hardware and a computer instruction.

In addition, the functional modules in the embodiments of the present disclosure can be integrated together to form an independent part, or each module can exist independently, or two or more modules can be integrated to form an independent part.

The function, if implemented in a form of a software functional module and sold or used as an independent product, can be stored in a computer-readable storage medium. Based on such understanding, the technical solution of the present disclosure essentially can be, or part of the technical solution contributing to the prior art can be, or part of the technical solution can be embodied in a form of a software product. The computer software product is stored in a computer-readable storage medium and includes several instructions for enabling a computer device (which can be a personal computer, a notebook computer, a server, an electronic device, or the like) to implement all or part of the steps of the method described in the embodiments of the present disclosure. The foregoing computer-readable storage medium includes any medium that can store program code, such as a USB flash drive, a removable hard disk, a read-only memory (ROM), a random access memory (RAM), a magnetic disk, or an optical disc.

## Claims

1. An AI chip comprising:
N convolution cores, wherein N is an integer greater than or equal to 2;
a storage control system, electrically connected to the N convolution cores, wherein the storage control system is configured to read input image data from a memory, distribute the input image data to each convolution core, read each weight block from the memory, split each weight block into N pieces of weight data, and distribute the N pieces of weight data to the N convolution cores, wherein each convolution core corresponds to one piece of weight data, and each weight block is a part of complete weight; and
each convolution core is configured to perform a convolution operation on received weight data and the input image data, wherein convolution operation results of each convolution core for the same weight block are added to obtain convolution operation results of each weight block, and the convolution operation results of each weight block are added to obtain a final convolution operation result;
**characterized in that**,
the storage control system is configured to: split each weight block with a size of A*B into N pieces of weight data with a size of A*Kpc, or split each weight block with a size of B*A into N pieces of weight data with a size of Kpc*A, wherein A, B, and Kpc are positive integers, B is a maximum number of weight element groups processed by each convolution pass for all convolution cores, A is a maximum height of all convolution cores in a first direction, and Kpc is a maximum number of weight element groups processed by each convolution pass for each convolution core in a second direction;
and that, the storage control system comprises:
a first image data loading module, configured to read the input image data from a memory and distribute the input image data to each convolution core;
a second image data loading module, configured to read each weight block from the memory; and
a weight data processing module, separately electrically connected to the second image data loading module and the N convolution cores, wherein the weight data processing module is configured to split each weight block with a size of A*B into N pieces of weight data with a size of A*Kpc and distribute the weight data to the N convolution cores, or split each weight block with a size of B*A into N pieces of weight data with a size of Kpc*A and distribute the weight data to the N convolution cores.

2. The AI chip according to claim 1, wherein when the weight data processing module is configured to split each weight block with a size of A*B into N pieces of weight data with a size of A*Kpc, the weight data processing module comprises:
N registers that are in one-to-one correspondence with the N convolution cores, wherein the N registers are electrically connected to the second image data loading module, and each register is configured to store a piece of weight data with a size of A*Kpc.

3. The AI chip according to claim 1, wherein the weight data processing module comprises: N extractors, electrically connected to the second image data loading module, wherein each of the extractors is configured to extract one piece of weight data with a size of Kpc*A from one weight block in one clock cycle when the weight block has a size of B*A and Kpc=1.

4. The AI chip according to claim 1, wherein the weight data processing module comprises: N logic shifters,
wherein N logic shifters are electrically connected to the second image data loading module, each of the shifters is configured to extract one piece of weight data with a size of Kpc*A from one weight block in A clock cycles when the weight block has a size of B*A and Kpc>1.

5. The AI chip according to claim 1, wherein when the weight data processing module is configured to split each weight block with a size of B*A into N pieces of weight data with a size of Kpc*A, the weight data processing module comprises:
N extractors, electrically connected to the second image data loading module, wherein each of the extractors is configured to extract one piece of weight data with a size of Kpc*A from one weight block in one clock cycle;
N logic shifters, electrically connected to the second image data loading module, wherein each of the shifters is configured to extract one piece of weight data with a size of Kpc*A from one weight block in A clock cycles; and
N selectors that are in one-to-one correspondence with the N convolution cores, wherein each of the selectors is electrically connected to one of the extractors, one of the logic shifters and one convolution core, and each of the selectors is configured to send output of an extractor to a corresponding convolution core when Kpc=1 and send output of a logic shifter to a corresponding convolution core when Kpc>1.

6. The AI chip according to claim 1, wherein the weight data processing module comprises:
N registers that are in one-to-one correspondence with the N convolution cores, wherein the N registers are electrically connected to the second image data loading module, and each register is configured to store one piece of weight data with a size of A*Kpc;
N extractors, electrically connected to the second image data loading module, wherein each of the extractors is configured to extract one piece of weight data with a size of Kpc*A from one weight block in one clock cycle;
N logic shifters, electrically connected to the second image data loading module, wherein each of the shifters is configured to extract one piece of weight data with a size of Kpc*A from one weight block in A clock cycles;
N first selectors, wherein each of the first selectors is electrically connected to one of the extractors and one of the logic shifters, and each of the first selectors is configured to select and output an output data of a corresponding extractor when Kpc=1 and select and output an output data of a corresponding logic shifter when Kpc>1; and
N second selectors, wherein each of the second selectors is electrically connected to one of the first selectors, one of the registers and one of the convolution cores, and each of the second selectors is configured to select and output an output data of a corresponding register when a weight block has a size of A*B and select and output an output data of a corresponding first selector when a weight block has a size of B*A.

7. The AI chip according to any one of claims 1 to 6, wherein each convolution core is further configured to, when receiving weight data with a size of Kpc*A, convert the weight data with a size of Kpc*A into weight data with a size of A*Kpc, and perform a convolution operation on the weight data and the input image data.

8. An electronic device, comprising: a memory and the AI chip according to any one of claims 1 to 7, wherein the AI chip is electrically connected to the memory.

9. A computer-implemented convolution operation method, implemented by means of an AI chip according to anyone of the preceding claims and comprising:
reading input image data, reading each weight block, and splitting each weight block into N pieces of weight data, wherein each weight block is a part of complete weight;
performing a convolution operation on each piece of weight data and the input image data;
adding convolution operation results of each piece of weight data belonging to the same weight block to obtain convolution operation results of each weight block; and
adding the convolution operation results of each weight block to obtain a final convolution operation result.

## Patentansprüche

1. KI-Chip, umfassend:
- N Faltungskerne, wobei N eine ganze Zahl größer oder gleich 2 ist;
- ein Speichersteuersystem, das elektrisch mit den N Faltungskernen verbunden ist, wobei das Speichersteuersystem eingerichtet ist, um Eingabebilddaten aus einem Speicher zu lesen, die Eingabebilddaten an jeden Faltungskern zu verteilen, jeden Gewichtsblock aus dem Speicher zu lesen, jeden Gewichtsblock in N Teile von Gewichtsdaten aufzuteilen und die N Teile von Gewichtsdaten an die N Faltungskerne zu verteilen, wobei jeder Faltungskern einem Teil der Gewichtsdaten entspricht, und jeder Gewichtsblock ein Teil eines vollständigen Gewichts ist; und
- wobei jeder Faltungskern eingerichtet ist, um einen Faltungsbetrieb an den empfangenen Gewichtsdaten und den eingegebenen Bilddaten durchzuführen, wobei die Faltungsbetriebsergebnisse jedes Faltungskerns für denselben Gewichtsblock addiert werden, um die Faltungsbetriebsergebnisse jedes Gewichtsblocks zu erhalten, und die Faltungsbetriebsergebnisse jedes Gewichtsblocks addiert werden, um ein endgültiges Faltungsbetriebsergebnis zu erhalten;
- **dadurch gekennzeichnet, dass**
- das Speichersteuersystem eingerichtet ist, um: jeden Gewichtsblock mit einer Größe von A*B in N Teile von Gewichtsdaten mit einer Größe von A*Kpc aufzuteilen oder jeden Gewichtsblock mit einer Größe von B*A in N Teile von Gewichtsdaten mit einer Größe von Kpc*A aufzuteilen, wobei A, B und Kpc positive ganze Zahlen sind, B eine maximale Anzahl von Gewichtselementgruppen ist, die von jedem Faltungsdurchlauf für alle Faltungskerne verarbeitet werden, A eine maximale Höhe aller Faltungskerne in eine erste Richtung ist und Kpc eine maximale Anzahl von Gewichtselementgruppen ist, die von jedem Faltungsdurchlauf für jeden Faltungskern in eine zweite Richtung verarbeitet werden;
- und dass das Speichersteuersystem aufweist:
- ein erstes Bilddaten-Lademodul, das eingerichtet ist, um die Eingabebilddaten aus einem Speicher zu lesen und die Eingabebilddaten an jeden Faltungskern zu verteilen;
- ein zweites Bilddaten-Lademodul, das eingerichtet ist, um jeden Gewichtsblock aus dem Speicher zu lesen; und
- ein Gewichtsdaten-Verarbeitungsmodul, das separat elektrisch mit dem zweiten Bilddaten-Lademodul und den N Faltungskernen verbunden ist, wobei das Gewichtsdaten-Verarbeitungsmodul eingerichtet ist, um jeden Gewichtsblock mit einer Größe von A*B in N Teile von Gewichtsdaten mit einer Größe von A* Kpc aufzuteilen und die Gewichtungsdaten an die N Faltungskerne zu verteilen, oder jeden Gewichtsblock mit einer Größe von B*A in N Teile von Gewichtsdaten mit einer Größe von Kpc*A aufzuteilen und die Gewichtungsdaten an die N Faltungskerne zu verteilen.

2. KI-Chip nach Anspruch 1, wobei, wenn das Gewichtsdaten-Verarbeitungsmodul eingerichtet ist, um jeden Gewichtsblock mit einer Größe von A*B in N Teile von Gewichtsdaten mit einer Größe von A*Kpc aufzuteilen, das Gewichtsdaten-Verarbeitungsmodul aufweist:
- N Register, die in einer Eins-zu-Eins-Entsprechung zu den N Faltungskernen stehen, wobei die N Register elektrisch mit dem zweiten Bilddaten-Lademodul verbunden sind und jedes Register eingerichtet ist, um ein Gewichtsdatenteil mit einer Größe von A*Kpc zu speichern.

3. KI-Chip nach Anspruch 1, wobei das Gewichtsdaten-Verarbeitungsmodul aufweist: N Extraktoren, die elektrisch mit dem zweiten Bilddaten-Lademodul verbunden sind, wobei jeder der Extraktoren eingerichtet ist, um ein Gewichtsdatenteil mit einer Größe von Kpc*A aus einem Gewichtsblock in einem Taktzyklus zu extrahieren, wenn der Gewichtsblock eine Größe von B*A aufweist und Kpc = 1 ist.

4. KI-Chip nach Anspruch 1, wobei das Gewichtsdaten-Verarbeitungsmodul aufweist:
- N logische Schieberegler,
- wobei N logische Schieberegler elektrisch mit dem zweiten Bilddaten-Lademodul verbunden sind, wobei jeder der Schieberegler eingerichtet ist, um ein Gewichtsdatenteil mit einer Größe von Kpc*A aus einem Gewichtsblock in A Taktzyklen zu extrahieren, wenn der Gewichtsblock eine Größe von B*A aufweist und Kpc > 1 ist.

5. KI-Chip nach Anspruch 1, wobei, wenn das Gewichtsdaten-Verarbeitungsmodul eingerichtet ist, um jeden Gewichtsblock mit einer Größe von B*A in N Teile von Gewichtsdaten mit einer Größe von Kpc*A aufzuteilen, das Gewichtsdaten-Verarbeitungsmodul aufweist:
- N Extraktoren, die elektrisch mit dem zweiten Bilddaten-Lademodul verbunden sind, wobei jeder der Extraktoren eingerichtet ist, um ein Gewichtsdatenteil mit einer Größe von Kpc*A aus einem Gewichtsblock in einem Taktzyklus zu extrahieren,
- N Logik-Schieberegler, die elektrisch mit dem zweiten Bilddaten-Lademodul verbunden sind, wobei jeder der Schieberegler eingerichtet ist, um ein Gewichtsdatenteil mit einer Größe von Kpc*A aus einem Gewichtsblock in A Taktzyklen zu extrahieren, und
- N Selektoren, die in einer Eins-zu-Eins-Entsprechung zu den N Faltungskernen stehen, wobei jeder der Selektoren elektrisch mit einem der Extraktoren, einem der logischen Schieberegler und einem Faltungskern verbunden ist und jeder der Selektoren eingerichtet ist, um eine Ausgabe eines Extraktors an einen entsprechenden Faltungskern zu senden, wenn Kpc = 1 ist, und eine Ausgabe eines logischen Schiebereglers an einen entsprechenden Faltungskern zu senden, wenn Kpc > 1 ist.

6. KI-Chip nach Anspruch 1, wobei das Gewichtsdaten-Verarbeitungsmodul aufweist:
- N Register, die in einer Eins-zu-Eins-Entsprechung zu den N Faltungskernen stehen, wobei die N Register elektrisch mit dem zweiten Bilddaten-Lademodul verbunden sind und jedes Register eingerichtet ist, um ein Gewichtsdatenteil mit einer Größe von A*Kpc zu speichern;
- N Extraktoren, die elektrisch mit dem zweiten Bilddaten-Lademodul verbunden sind, wobei jeder der Extraktoren eingerichtet ist, um ein Gewichtsdatenteil mit einer Größe von Kpc*A aus einem Gewichtsblock in einem Taktzyklus zu extrahieren;
- N Logik-Schieberegler, die elektrisch mit dem zweiten Bilddaten-Lademodul verbunden sind, wobei jeder der Schieberegler eingerichtet ist, um ein Gewichtsdatenteil mit einer Größe von Kpc*A aus einem Gewichtsblock in A Taktzyklen zu extrahieren;
- N erste Selektoren, wobei jeder der ersten Selektoren elektrisch mit einem der Extraktoren und einem der logischen Schieberegler verbunden ist und jeder der ersten Selektoren eingerichtet ist, um einen Ausgabewert eines entsprechenden Extraktors bei Kpc = 1 auszuwählen und auszugeben und einen Ausgabewert eines entsprechenden logischen Schiebereglers bei Kpc > 1 auszuwählen und auszugeben; und
- N zweite Selektoren, wobei jeder der zweiten Selektoren elektrisch mit einem der ersten Selektoren, einem der Register und einem der Faltungskerne verbunden ist, und jeder der zweiten Selektoren eingerichtet ist, um ein Ausgabewert eines entsprechenden Registers auszuwählen und auszugeben, wenn ein Gewichtsblock eine Größe von A*B aufweist, und ein Ausgabewert eines entsprechenden ersten Selektors auszuwählen und auszugeben, wenn ein Gewichtsblock eine Größe von B*A aufweist.

7. KI-Chip nach einem der Ansprüche 1 bis 6, wobei jeder Faltungskern ferner eingerichtet ist, um beim Empfang von Gewichtsdaten mit einer Größe von Kpc*A die Gewichtsdaten mit einer Größe von Kpc*A in Gewichtsdaten mit einer Größe von A*Kpc umzuwandeln und einen Faltungsbetrieb an den Gewichtsdaten und Eingabebilddaten durchzuführen.

8. Elektronische Vorrichtung, umfassend: einen Speicher und den KI-Chip nach einem der Ansprüche 1 bis 7, wobei der KI-Chip elektrisch mit dem Speicher verbunden ist.

9. Computerimplementiertes Faltungsbetriebsverfahren, das mittels eines KI-Chips nach einem der vorhergehenden Ansprüche implementiert wird und aufweist:
- Lesen von Eingabebilddaten, Lesen jedes Gewichtsblocks und Aufteilen jedes Gewichtsblocks in N Teile von Gewichtsdaten, wobei jeder Gewichtsblock ein Teil des vollständigen Gewichts ist;
- Durchführen eines Faltungsbetriebs an jedem Gewichtsdatenteil und den Eingabebilddaten;
- Addieren von Faltungsbetriebsergebnissen jedes Gewichtsdatenteils, der zum selben Gewichtsblock gehört, um Faltungsbetriebsergebnisse jedes Gewichtsblocks zu erhalten; und
- Addieren der Faltungsbetriebsergebnisse jedes Gewichtsblocks, um ein endgültiges Faltungsbetriebsergebnis zu erhalten.

## Revendications

1. Puce d'IA comprenant :
N cœurs de convolution, dans laquelle N est un nombre entier supérieur ou égal à 2 ;
un système de commande de stockage, connecté électriquement aux N cœurs de convolution, dans laquelle le système de commande de stockage est configuré pour lire des données d'image d'entrée à partir d'une mémoire, distribuer les données d'image d'entrée à chaque cœur de convolution, lire chaque bloc de poids à partir de la mémoire, diviser chaque bloc de poids en N éléments de données de poids, et distribuer les N éléments de données de poids aux N cœurs de convolution, dans laquelle chaque cœur de convolution correspond à un élément de donnée de poids, et chaque bloc de poids est une partie d'un poids complet ; et
chaque cœur de convolution est configuré pour effectuer une opération de convolution sur les données de poids reçues et les données d'image d'entrée, dans laquelle des résultats d'opération de convolution de chaque cœur de convolution pour le même bloc de poids sont additionnés afin d'obtenir des résultats d'opération de convolution de chaque bloc de poids, et les résultats d'opération de convolution de chaque bloc de poids sont additionnés afin d'obtenir un résultat d'opération de convolution final ;
**caractérisé en ce que**
le système de commande de stockage est configuré pour : diviser chaque bloc de poids d'une taille de A*B en N éléments de données de poids d'une taille de A*Kpc, ou diviser chaque bloc de poids d'une taille de B*A en N éléments de données de poids d'une taille de Kpc*A, où A, B et Kpc sont des entiers positifs, B est un nombre maximal de groupes d'éléments de poids traités par chaque passage de convolution pour tous les cœurs de convolution, A est une hauteur maximale de tous les cœurs de convolution dans une première direction, et Kpc est un nombre maximal de groupes d'éléments de poids traités par chaque passage de convolution pour chaque cœur de convolution dans une seconde direction ;
et **en ce que**
le système de commande de stockage comprend :
un premier module de chargement de données d'image, configuré pour lire les données d'image d'entrée à partir d'une mémoire et distribuer les données d'image d'entrée à chaque cœur de convolution ;
un second module de chargement de données d'image, configuré pour lire chaque bloc de poids à partir de la mémoire ; et
un module de traitement des données de poids, connecté électriquement de manière indépendante au second module de chargement des données d'image et aux N cœurs de convolution, où le module de traitement des données de poids est configuré pour diviser chaque bloc de poids d'une taille de A*B en N éléments de données de poids d'une taille de A*Kpc et distribuer les données de poids aux N cœurs de convolution, ou diviser chaque bloc de poids d'une taille de B*A en N éléments de données de poids d'une taille de Kpc*A et distribuer les données de poids aux N cœurs de convolution.

2. Puce d'IA selon la revendication 1, dans laquelle, lorsque le module de traitement des données de poids est configuré pour diviser chaque bloc de poids d'une taille de A*B en N éléments de données de poids d'une taille de A*Kpc, le module de traitement des données de poids comprend :
N registres qui sont en correspondance biunivoque avec les N cœurs de convolution, dans laquelle les N registres sont reliés électriquement au second module de chargement des données d'image, et chaque registre est configuré pour stocker un élément de donnée de poids d'une taille de A*Kpc.

3. Puce d'IA selon la revendication 1, dans laquelle le module de traitement des données de poids comprend : N extracteurs, reliés électriquement au second module de chargement de données d'image, dans laquelle chacun des extracteurs est configuré pour extraire un élément de donnée de poids d'une taille de Kpc*A à partir d'un bloc de poids en un seul cycle d'horloge lorsque le bloc de poids a une taille de B*A et Kpc = 1.

4. Puce d'IA selon la revendication 1, dans laquelle le module de traitement des données de poids comprend : N décaleurs logiques,
dans laquelle N décaleurs logiques sont connectés électriquement au second module de chargement de données d'image, chacun des décaleurs est configuré pour extraire un élément de donnée de poids d'une taille de Kpc*A à partir d'un bloc de poids en A cycles d'horloge lorsque le bloc de poids a une taille de B*A et Kpc > 1.

5. Puce d'IA selon la revendication 1, dans laquelle, lorsque le module de traitement des données de poids est configuré pour diviser chaque bloc de poids d'une taille de B*A en N éléments de données de poids d'une taille de Kpc*A, le module de traitement des données de poids comprend :
N extracteurs, reliés électriquement au second module de chargement de données d'image, dans laquelle chacun des extracteurs est configuré pour extraire un élément de donnée de poids d'une taille de Kpc*A à partir d'un bloc de poids en un seul cycle d'horloge ;
N décaleurs logiques, reliés électriquement au second module de chargement de données d'image, dans laquelle chacun des décaleurs est configuré pour extraire un élément de donnée de poids d'une taille de Kpc*A à partir d'un bloc de poids en A cycles d'horloge ; et
N sélecteurs qui sont en correspondance biunivoque avec les N cœurs de convolution, dans laquelle chacun des sélecteurs est relié électriquement à l'un des extracteurs, à l'un des décaleurs logiques et à un cœur de convolution, et chacun des sélecteurs est configuré pour envoyer la sortie d'un extracteur vers un cœur de convolution correspondant lorsque Kpc = 1 et pour envoyer la sortie d'un décaleur logique vers un cœur de convolution correspondant lorsque Kpc > 1.

6. Puce d'IA selon la revendication 1, dans laquelle le module de traitement des données de poids comprend :
N registres qui sont en correspondance biunivoque avec les N cœurs de convolution, dans laquelle les N registres sont reliés électriquement au second module de chargement des données d'image, et chaque registre est configuré pour stocker un élément de donnée de poids d'une taille de A*Kpc ;
N extracteurs, reliés électriquement au second module de chargement de données d'image, dans laquelle chacun des extracteurs est configuré pour extraire un élément de donnée de poids d'une taille de Kpc*A à partir d'un bloc de poids en un seul cycle d'horloge ;
N décaleurs logiques, reliés électriquement au second module de chargement de données d'image, dans laquelle chacun des décaleurs est configuré pour extraire un élément de donnée de poids d'une taille de Kpc*A à partir d'un bloc de poids en A cycles d'horloge ;
N premiers sélecteurs, dans laquelle chacun des premiers sélecteurs est relié électriquement à l'un des extracteurs et à l'un des décaleurs logiques, et chacun des premiers sélecteurs est configuré pour sélectionner et fournir en sortie une donnée de sortie d'un extracteur correspondant lorsque Kpc = 1, et pour sélectionner et fournir en sortie une donnée de sortie d'un décaleur logique correspondant lorsque Kpc > 1 ; et
N seconds sélecteurs, dans laquelle chacun des seconds sélecteurs est relié électriquement à l'un des premiers sélecteurs, à l'un des registres et à l'un des cœurs de convolution, et chacun des seconds sélecteurs est configuré pour sélectionner et fournir en sortie une donnée de sortie d'un registre correspondant lorsqu'un bloc de poids a une taille de A*B, et pour sélectionner et fournir en sortie une donnée de sortie d'un premier sélecteur correspondant lorsqu'un bloc de poids a une taille de B*A.

7. Puce d'IA selon l'une quelconque des revendications 1 à 6, dans laquelle chaque cœur de convolution est en outre configuré pour, lorsqu'il reçoit des données de poids d'une taille de Kpc*A, convertir les données de poids d'une taille de Kpc*A en données de poids d'une taille de A*Kpc, et effectuer une opération de convolution sur les données de poids et les données d'image d'entrée.

8. Dispositif électronique, comprenant : une mémoire et la puce d'IA selon l'une quelconque des revendications 1 à 7, dans lequel la puce d'IA est reliée électriquement à la mémoire.

9. Procédé d'opération de convolution mis en œuvre par ordinateur, réalisé au moyen d'une puce d'IA selon l'une quelconque des revendications précédentes et comprenant :
la lecture des données d'image d'entrée, la lecture de chaque bloc de poids et la division de chaque bloc de poids en N éléments de données de poids, dans lequel chaque bloc de poids constitue une partie d'un poids complet ;
la réalisation d'une opération de convolution sur chaque élément de donnée de poids et les données d'image d'entrée ;
l'addition de résultats d'opération de convolution de chaque élément de donnée de poids appartenant au même bloc de poids afin d'obtenir des résultats d'opération de convolution de chaque bloc de poids ; et
l'addition des résultats d'opération de convolution de chaque bloc de poids afin d'obtenir un résultat d'opération de convolution final.
